# EUROPEAN PATENT APPLICATION

(11) **EP 4 753 114 A1**
(43) Date of publication of application: **03.06.2026**
(21) Application number: 24845183.3
(22) Date of filing: 28.05.2024
(51) Int. Cl.: H02K 1/276

(54) **EMBEDDED MAGNET-TYPE ROTOR AND ROTATING ELECTRIC MACHINE**

(30) Priority: 26.07.2023 JP 2023121525
(71) Applicant: KABUSHIKI KAISHA TOSHIBA, Minato-ku Tokyo 105-0023 (JP)
(72) Inventor: MATSUBARA, Masakatsu, Kawasaki-shi, Kanagawa 212-0013 (JP); Matsuoka, Yusuke, Kawasaki-shi, Kanagawa 212-0013 (JP); MORI, Daisuke, Kawasaki-shi, Kanagawa 212-0013 (JP); SASAKI, Naoya, Kawasaki-shi, Kanagawa 212-0013 (JP); TANAKA, Hiroto, Kawasaki-shi, Kanagawa 212-0013 (JP)
(74) Representative: AWA Sweden AB
(86) International application number: PCT/JP2024/019528
(87) International publication number: WO 2025/022801

(57) **Abstract**

According to the embodiment, an interior permanent magnet rotor (30) comprises: a rotor shaft; a rotor core (10) mounted to an outer circumference of the rotor shaft; and permanent magnets (3) located inside the rotor core (10) and arranged to form one pair or a plurality of pairs with each other in a circumferential direction in each magnetic pole part. The rotor core (10) includes an inner core (12) mounted to the outer circumference of the rotor shaft, an outer core having a fan shape located in each of the magnetic pole parts, a filling member filled between the inner and outer cores, and a positioning member configured to maintain a relative position between the inner core and each of the outer cores. The inner core and the outer cores are formed so that the inner core and the outer cores engage each other via the filling member.

## Description

### [Technical Field]

The invention relates to an interior permanent magnet rotor, and a rotating electric machine that uses the interior permanent magnet rotor.

### [Background Art]

Permanent magnet-type rotors generally include interior permanent magnet rotors, in which permanent magnets are arranged inside the rotor core, and surface permanent magnet rotors, in which permanent magnets are arranged at the outer surface of the rotor core.

In many interior permanent magnet rotors, a technique is used in which housing holes for each housing a permanent magnet are formed in the rotor core; and each of the permanent magnets is press-fitted into each of the housing holes.

Here, the permanent magnet is a brittle sintered product similar to a ceramic that has large dimensional tolerances, and is therefore easily chipped and scratched at portions that contact the wall surface of the housing hole when press-fitting. Also, when the surface of the permanent magnet is coated with a corrosion inhibitor or other coating, the coating easily detaches. Furthermore, the press-fitting of the permanent magnet causes the electrical steel sheets included in the rotor core to bulge in the radially outward direction and nonuniformly deform, resulting in the occurrence of unevenness of the side circumferential surface of the rotor core and the generation of magnetic noise, torque ripple, etc. To avoid these problems, a process such as polishing or the like is necessary to improve the dimensional tolerance of the permanent magnet; however, such a separate process may cause a drastic cost increase.

To solve this problem and decrease leakage magnetic flux, techniques have been proposed in which the top bridge (the bridge at the outer circumference side) and the center bridge (the bridge around the d-axis between the magnets) are not included. In other words, a technique has been proposed in which the radially outer part and the radially inner part of each magnetic pole part are separated, and are assembled together with the permanent magnets.

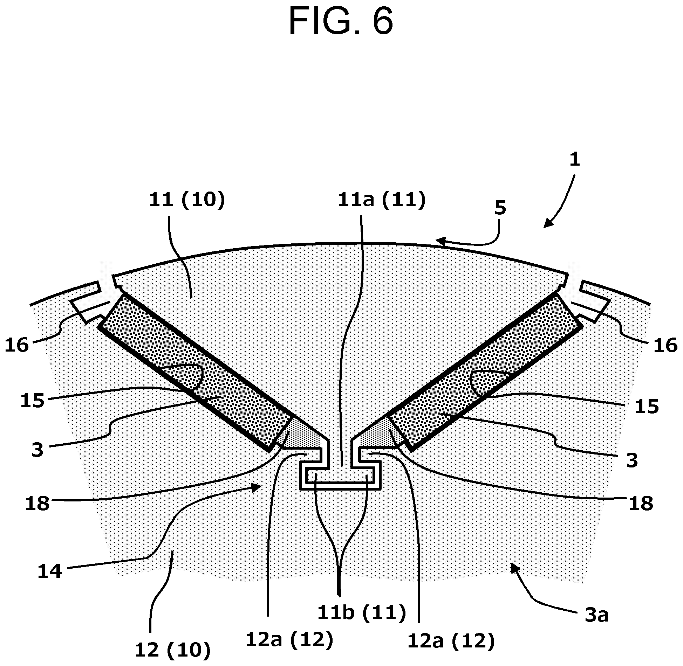

FIG. 6 is a partial transverse cross-sectional view showing a conventional example of an interior permanent magnet rotor 1. In FIG. 6 as described above, a rotor core 10 of the interior permanent magnet rotor 1 includes an inner core 12, which is a radially inner part, and an outer core 11, which is a radially outer part in each magnetic pole part 3a. The outer core 11 and the inner core 12 are separated from each other and are separate bodies.

The outer core 11 includes an outer core extension part 11a that extends toward the radially inner side of the outer core 11, and two outer core engaging parts 11b that are connected to the innermost portion of the outer core extension part 11a and extend toward two sides in the circumferential direction. The inner core 12 includes two inner core engaging parts 12a formed to engage the outer core engaging parts 11b of the outer core 11. The outer core engaging part 11b and the inner core engaging part 12a include portions that overlap each other when the radially outer side is transparently viewed from the radially inner side.

A portion of the space defined by the outer core 11 and the inner core 12 is a magnet housing hole 15 that houses a permanent magnet 3.

A filling member 18 is filled into at least a portion of the magnet housing hole 15 and the space between the outer core engaging part 11b and the inner core engaging part 12a. The outer core 11 and the inner core 12 are connected and formed as one piece by the filling member 18. As a result, the centrifugal force that acts on the permanent magnet 3 and the outer core 11 in the rotating state of the interior permanent magnet rotor 1 is transmitted from the outer core engaging part 11b to the inner core engaging part 12a via the filling member 18. In other words, the permanent magnet 3 and the outer core 11 are held by the inner core engaging part 12a overcoming the centrifugal force when rotating.

Such a configuration makes it possible to assemble the outer core 11, the permanent magnet 3, and the inner core 12. Accordingly, it is unnecessary to press-fit the permanent magnet 3 into the magnet housing hole 15 of the rotor core 10.

### [Prior Art Documents]

### [Patent Literature]

Patent Document 1: Japanese Patent Application Laid-open No. 2011-109786

### [Summary of Invention]

### [Problem to be Solved by the Invention]

The interior permanent magnet rotor 1 shown in FIG. 6 has the advantage that it is unnecessary to press-fit the permanent magnet 3 into the magnet housing hole 15 of the rotor core 10 and there are no problems accompanying press-fitting, but there are major problems.

That is, when forming the outer core 11 and the inner core 12 as one piece by filling the filling member 18 between the outer core 11 and the inner core 12, it is necessary to set the outer core 11 and the inner core 12 in a prescribed relative positional relationship. In other words, it is necessary to arrange the inner core 12 and as many outer cores 11 as there are magnetic pole parts 3a in prescribed relative positions, inject the filling member 18, and maintain the relative positional relationships of the outer cores 11, the inner core 12, and the permanent magnets 3 until the filling member 18 solidifies.

If accurate positioning is not possible, it is necessary to dispose the outer circumference of the outer core 11 toward the radially inner side by the amount that accurate positioning is not possible to avoid contact between the interior permanent magnet rotor 1 and the stator. In other words, it is necessary to reduce the outer diameter of the rotor and increase the gap width between the rotor and the stator. A larger gap width results in a problem in which the magnetoresistance increases and the torque performance degrades or fluctuates.

On the other hand, it has been a problem to perform accurate positioning because special-purpose jigs and machines are necessary for accurate positioning, and more procedures are used for positioning, which led to an increase of manufacturing costs.

An object of the invention is to provide an interior permanent magnet rotor and a rotating electric machine in which the outer core 11 and the inner core 12 can be positioned.

### [Means for Solving the Problem]

To achieve the object described above, an interior permanent magnet rotor according to an embodiment of the invention includes a rotor shaft extending in a rotation axis direction, a rotor core mounted to an outer circumference of the rotor shaft, and permanent magnets located inside the rotor core and arranged to form one pair or multiple pairs with each other in a circumferential direction in each magnetic pole part, in which the rotor core includes an inner core mounted to the outer circumference of the rotor shaft and including permanent magnet-supporting inner recesses formed to support each of the permanent magnets, an outer core that is located at a radially outer side of the inner core in each of the magnetic pole parts and has a fan shape, a filling member filled between the inner core and the outer cores, and a positioning member configured to maintain a relative position between the inner core and each of the outer cores, in which the inner core and the outer core are formed so that the inner core and the outer core engage each other via the filling member at radially innermost parts of the outer cores.

### [Brief Description of Drawings]

[FIG. 1]

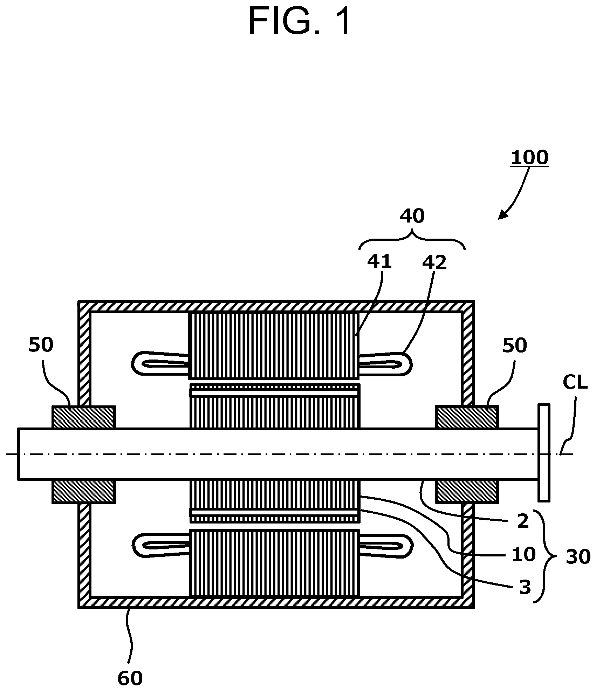

   FIG. 1 is a longitudinal cross-sectional view showing a rotating electric machine according to a first embodiment.
[FIG. 2]

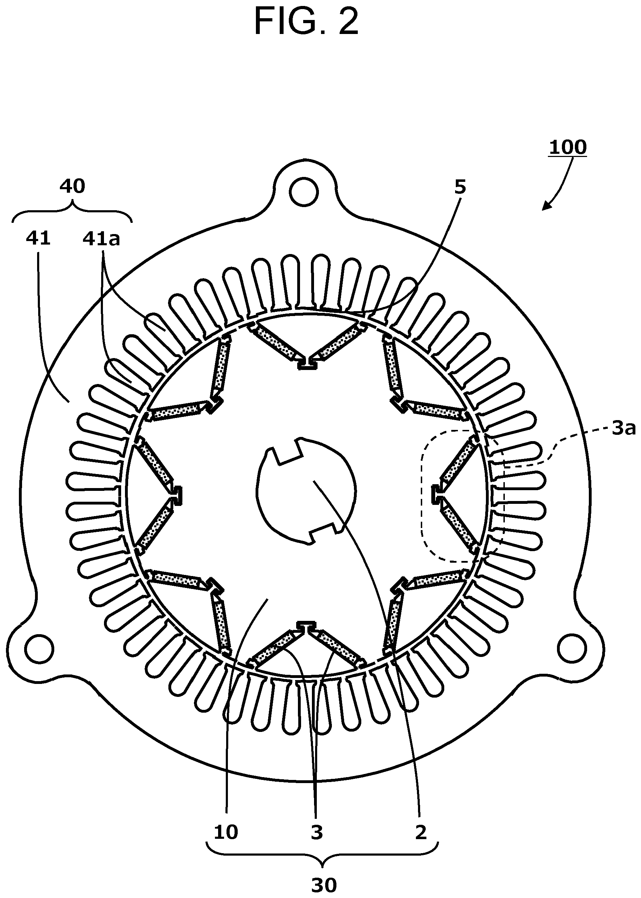

   FIG. 2 is a transverse cross-sectional view showing the rotating electric machine according to the first embodiment.
[FIG. 3]

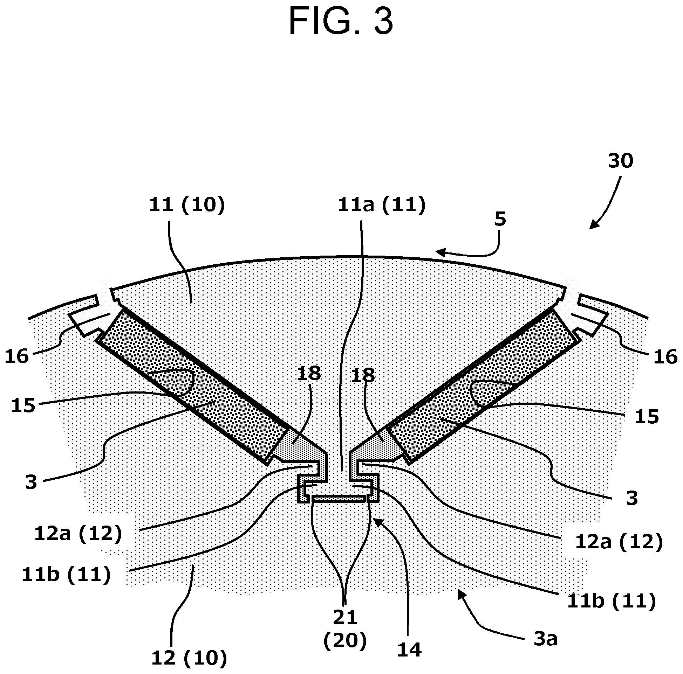

   FIG. 3 is a partial transverse cross-sectional view showing an interior permanent magnet rotor according to the first embodiment.
[FIG. 4]

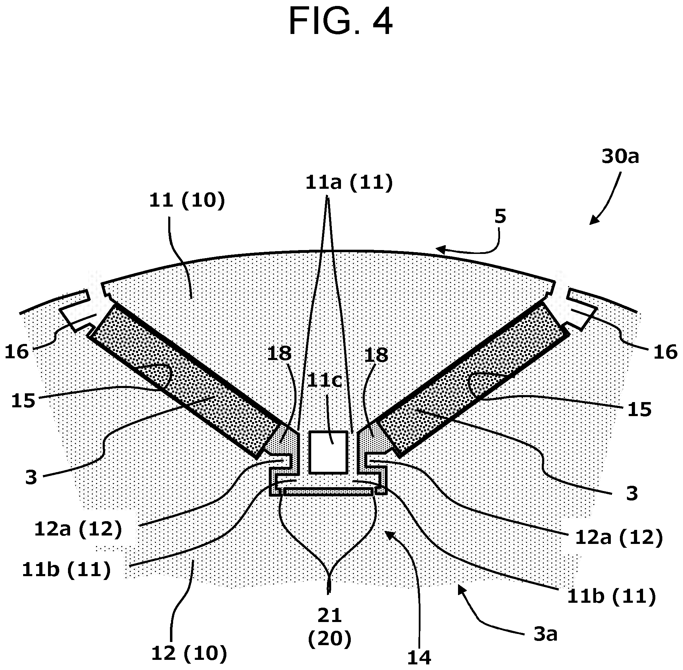

   FIG. 4 is a partial transverse cross-sectional view showing an interior permanent magnet rotor according to a second embodiment.
[FIG. 5]

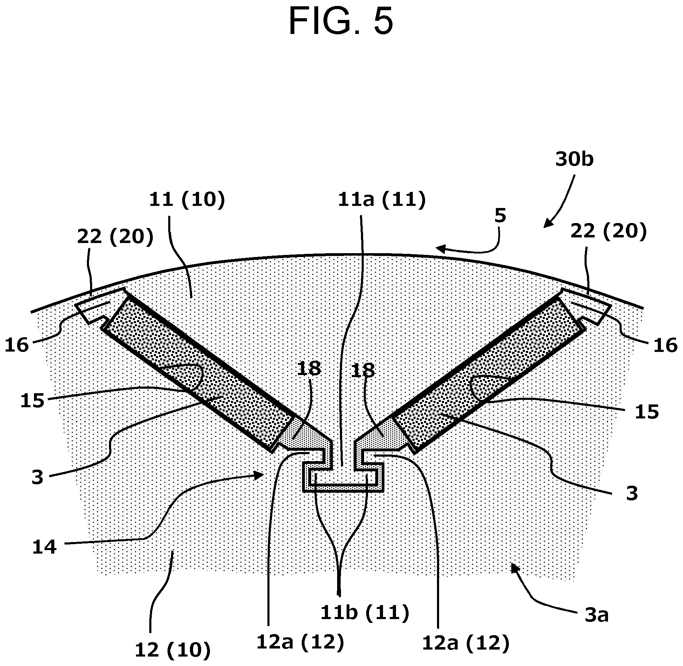

   FIG. 5 is a partial transverse cross-sectional view showing an interior permanent magnet rotor according to a third embodiment.
[FIG. 6]
   FIG. 6 is a partial transverse cross-sectional view showing a conventional example of an interior permanent magnet rotor.

### [Description of Embodiments]

Interior permanent magnet rotors and rotating electric machines that uses the interior permanent magnet rotors according to embodiments of the invention will now be described with reference to the drawings. Herein, the same or similar portions are marked with common reference numerals; and a redundant description is omitted.

### [First embodiment]

FIG. 1 is a longitudinal cross-sectional view showing a rotating electric machine 100 according to a first embodiment. Also, FIG. 2 is a transverse cross-sectional view showing the rotating electric machine 100 according to the first embodiment. In other words, FIG. 1 shows a cross section of the rotating electric machine 100 along a plane in a vertical direction including a rotation axis CL; and FIG. 2 shows a cross section of the rotating electric machine 100 along a plane perpendicular to the rotation axis CL.

The rotating electric machine 100 includes an interior permanent magnet rotor 30, a stator 40 arranged to surround the interior permanent magnet rotor 30 with a gap portion 5, bearings 50, and a housing 60 that houses the stator 40, etc., and provides static support for the bearings 50.

The stator 40 includes a stator core 41, and a stator winding 42 that includes parts housed in multiple stator slots 41a (FIG. 2) formed in the stator core 41.

The interior permanent magnet rotor 30 includes a rotor shaft 2 that extends in the rotation axis direction (hereinbelow, the axial direction) and is rotatably supported by the bearings, the rotor core 10 mounted to the rotor shaft 2, and the multiple permanent magnets 3 embedded in the rotor core 10.

As shown in FIG. 2, the multiple permanent magnets 3 are arranged so that two permanent magnets form one pair or multiple pairs with each other in the circumferential direction in each magnetic pole part 3a. FIG. 2 shows a case where an eight-pole rotor has eight magnetic pole parts 3a. The permanent magnets 3 are arranged in orientations such that the N-pole-S-pole directions of the permanent magnets 3 generate magnetic flux between mutually-adjacent magnetic pole parts 3a.

FIG. 3 is a partial transverse cross-sectional view showing the interior permanent magnet rotor 30 according to the first embodiment. FIG. 3 shows the part of each magnetic pole part 3a.

In each magnetic pole part 3a, as described above, two permanent magnets 3 are arranged to form one pair or multiple pairs with each other in the circumferential direction. Specifically, the two permanent magnets 3 are arranged in a V-shape spreading toward the radially outer side. Each permanent magnet 3 is housed inside the magnet housing hole 15.

In each magnetic pole part 3a, the rotor core 10 includes the inner core 12 directly mounted to the rotor shaft 2 (FIG. 1), and the outer core 11 located at the radially outer side of the inner core 12. In other words, the rotor core 10 includes one inner core 12 and as many outer cores 11 as there are magnetic pole parts 3a.

The outer core 11 has a fan shape spreading toward the radially outer side; and in each magnetic pole part 3a, the inner core 12 has a flared recess corresponding to the outer core 11.

In each magnetic pole part 3a, the inner core 12 and the outer core 11 form two magnet housing holes 15 that respectively house two permanent magnets 3. Outer spaces 16 are formed at the outer sides of the magnet housing holes 15 in the radial direction and communicate with the gap portion 5 at the outer side of the rotor core 10. Also, the filling member 18 is filled into the space between the inner core 12 and the outer core 11 that includes the magnet housing holes 15. Here, the filling member 18 is, for example, a resin such as a thermosetting resin, etc. The filling member 18 is filled into the entire magnet housing holes 15 or the portions of the magnet housing holes 15 at the radially inner side, and inside the spaces at the radially inner side of the magnet housing holes 15.

The inner core 12 and the outer core 11 include an engaging part 14 at the radially inner part of the outer core 11 such that the inner core 12 and the outer core 11 engage each other via the filling member 18. The outer core 11 includes the outer core extension part 11a extending toward the radially innermost part; and the innermost portion of the outer core extension part 11a in the radial direction is connected to two outer core engaging parts 11b formed to extend toward the two sides in the circumferential direction. Also, the inner core 12 includes the inner core engaging parts 12a arranged respectively at the radially outer sides of the outer core engaging parts 11b.

The filling member 18 is filled between the two outer core engaging parts 11b and the two inner core engaging parts 12a. The two outer core engaging parts 11b, the two inner core engaging parts 12a, and the filling member 18 filled between the two outer core engaging parts 11b and the two inner core engaging parts 12a form the engaging part 14. The engaging part 14 has the function of impeding movement of the outer core 11 toward the radially outer side due to the centrifugal force and retaining the outer core 11.

Two positioning inner bridges 21 are located between the circumferential inner surfaces of the outer core engaging parts 11b of the outer core 11 and the inner core 12 facing the inner surfaces.

The positioning inner bridge 21 is not a strength member that resists the centrifugal force applied to the outer core 11 and the permanent magnet 3. For this point, the strength is ensured by the outer core 11 and the inner core 12 being formed as one piece by the engaging part 14 and the filling member 18. As a positioning member 20, it is sufficient for the positioning inner bridge 21 to have the strength necessary for the positioning function of maintaining the relative positional relationship between the inner core 12 and each outer core 11 when assembling the rotor core 10. In other words, as long as the positioning inner bridge 21 has a width necessary for the positioning function, it is favorable for the positioning inner bridge 21 to be as narrow as possible from the perspective of suppressing a leakage magnetic flux increase.

In the interior permanent magnet rotor 30 of the embodiment thus configured, the positioning inner bridges 21 in each engaging part 14 connect between the inner core 12 and each outer core 11. Therefore, even when assembling the rotor core 10, the relative positional relationships between the inner core 12 and each outer core 11 are maintained, and the inner core 12 and each outer core 11 are not shifted from each other. In other words, each engaging part 14 has a positioning function. By suppressing fluctuation of the relative positions of the outer core 11 and the inner core 12, fluctuation of the torque performance is suppressed, resulting in improved torque performance.

Also, the positioning inner bridge 21 is as narrow as possible while ensuring the width necessary for the positioning function, and so the increase of the leakage magnetic flux is kept to a minimum.

### [Second embodiment]

FIG. 4 is a partial transverse cross-sectional view showing an interior permanent magnet rotor 30a according to a second embodiment. The embodiment is a modification of the first embodiment in which a portion of the configuration of the engaging part 14 is different. Otherwise, the embodiment is similar to the first embodiment.

Specifically, there are two outer core extension parts 11a in the circumferential direction; and an extension part barrier 11c is formed between the two outer core extension parts 11a. As a result, the rigidity of the base of the flared outer core 11 can be improved. Also, the rigidity value provided when one outer core extension part 11a is used can be maintained by the two outer core extension parts 11a according to the embodiment even when the total value of the widths of the two outer core extension parts 11a is less than the width of the outer core extension part 11a of the first embodiment. As a result, the width of the magnetic path of the leakage magnetic flux can be reduced, and so the leakage magnetic flux can be reduced.

### [Third embodiment]

FIG. 5 is a partial transverse cross-sectional view showing an interior permanent magnet rotor 30b according to a third embodiment. The embodiment is a modification of the first embodiment. The portion of the positioning member 20 according to the embodiment is different from that of the first embodiment. Otherwise, the embodiment is similar to the first embodiment.

According to the embodiment, instead of the positioning inner bridge 21 according to the first embodiment, a positioning outer circumference bridge 22 is provided as the positioning member 20.

The positioning outer circumference bridge 22 is arranged to straddle the portion of the outer space 16 adjacent to each magnet housing hole 15 at the radially outer side that communicates with the gap portion 5. In other words, the positioning outer circumference bridge 22 is arranged to connect the outer circumference part of the outer core 11 and the outer circumference part of the inner core 12.

As the positioning member 20, the positioning outer circumference bridge 22 is not a strength member for resisting the bending force applied to the outer core 11. For this point, the strength is ensured by the outer core 11 and the inner core 12 being formed as one piece by the engaging part 14 and the filling member 18. Similarly to the positioning inner bridge 21 according to the first embodiment, as the positioning member 20, it is sufficient for the positioning outer circumference bridge 22 to have the strength necessary for the positioning function of maintaining the relative positional relationship between the inner core 12 and each outer core 11 when assembling the rotor core 10. In other words, as long as the positioning outer circumference bridge 22 has a width necessary for the positioning function, it is favorable for the positioning outer circumference bridge 22 to be as narrow as possible from the perspective of suppressing a leakage magnetic flux increase.

In the interior permanent magnet rotor 30b of the embodiment thus configured, the positioning outer circumference bridges 22 in each engaging part 14 connect between the inner core 12 and each outer core 11. Therefore, even when assembling the rotor core 10, the relative positional relationships between the inner core 12 and each outer core 11 are maintained, and the inner core 12 and each outer core 11 are not shifted from each other. By suppressing fluctuation of the relative positions of the outer core 11 and the inner core 12, fluctuation of the torque performance is suppressed, resulting in improvement of the torque performance.

Also, the positioning outer circumference bridge 22 is as narrow as possible while ensuring the width necessary for the positioning function, and so the increase of the leakage magnetic flux is kept to a minimum.

According to the embodiments above, an interior permanent magnet rotor and a rotating electric machine can be provided in which positioning of the outer core 11 and the inner core 12 is possible.

### [Other embodiments]

While embodiments of the invention are described above, the embodiments are presented as examples, and are not intended to limit the scope of the inventions. Also, features of the embodiments may be combined. For example, the features of the second embodiment and the features of the third embodiment may be combined. Furthermore, the embodiments may be embodied in a variety of other forms; and various omissions, substitutions, and changes may be made without departing from the spirit of the inventions. The embodiments and their modifications are within the scope and spirit of the inventions, and are within the scope of the inventions described in the claims and their equivalents.

### [Reference Numeral List]

1 interior permanent magnet rotor
2 rotor shaft
3 permanent magnet
3a magnetic pole part
5 gap portion
10 rotor core
11 outer core
11a outer core extension part
11b outer core engaging part
11c extension part barrier
12 inner core
12a inner core engaging part
13 outer barrier
14 engaging part
15 magnet housing hole
16 outer space
18 filling member
20 positioning member
21 positioning outer circumference bridge
22 positioning inner bridge
30, 30a, 30b interior permanent magnet rotor
40 stator
41 stator core
41a stator slot
42 stator winding
50 bearing
60 housing
100 rotating electric machine

## Claims

1. An interior permanent magnet rotor, comprising:
a rotor shaft extending in a rotation axis direction;
a rotor core mounted to an outer circumference of the rotor shaft; and
permanent magnets located inside the rotor core and arranged to form one pair or a plurality of pairs with each other in a circumferential direction in each magnetic pole part,
the rotor core including
an inner core mounted to the outer circumference of the rotor shaft,
an outer core located at a radially outer side of the inner core in each of the magnetic pole parts, the outer core having a fan shape,
a filling member filled between the inner core and the outer cores, and
a positioning member configured to maintain a relative position between the inner core and each of the outer cores,
the inner core and the outer cores being formed so that the inner core and the outer cores engage each other via the filling member at radially innermost parts of the outer cores.

2. The interior permanent magnet rotor according to claim 1, wherein
the radially innermost part of each of the outer cores includes two outer core engaging parts formed to extend toward two sides in the circumferential direction,
the inner core includes an inner core engaging part arranged at a radially outer side of each of the outer core engaging parts, and
the positioning member includes at least one positioning inner bridge connecting each of the outer core engaging parts and the inner core engaging part.

3. The interior permanent magnet rotor according to claim 2, wherein
the outer core includes two mutually-parallel outer core extension parts connected to the outer core engaging parts.

4. The interior permanent magnet rotor according to claim 1, wherein
the positioning member includes a positioning outer circumference bridge connecting between adjacent portions in the circumferential direction of an outer circumference part of the outer core and an outer circumference part of the inner core.

5. A rotating electric machine, comprising:
the interior permanent magnet rotor according to any one of claims 1 to 4;
a stator located at a radially outer side of the interior permanent magnet rotor; and
a bearing rotatably supporting the rotor shaft.
